# FASCICULE DE BREVET EUROPEEN

(11) **EP 2 258 826 B1**
(45) Date de publication et mention de la délivrance du brevet: **20.03.2013**
(21) Numéro de dépôt: 10290294.7
(22) Date de dépôt: 03.06.2010
(51) Int. Cl.: C12C 1/027, C12C 1/10, E04B 9/00

(54) **Dispositif de germoir**
Keimvorrichtung
Malt floor device

(30) Priorité: 04.06.2009 FR 0902701
(43) Date de publication de la demande: 08.12.2010
(73) Titulaire: Malteurop Groupe, 51100 Reims (FR)
(72) Inventeur: Julien, Denis, 51360 Beaumont sur Vesle (FR)
(74) Mandataire: de Kernier, Gabriel

(56) Documents cités:
- EP-A1- 0 471 143
- EP-A2- 1 548 202
- DE-A1- 1 517 770
- DE-C- 608 955
- DE-U1-202006 001 207
- GB-A- 827 022
- GB-A- 1 141 804

## Description

L'invention concerne le domaine technique de la malterie.

Il s'agit de reproduire le développement naturel de germination d'une céréale, afin que celle-ci développe certains enzymes (notamment l'amylase, la protéase). Comme céréale on utilise généralement de l'orge, ou encore du seigle, du blé, du sorgho ou de l'épeautre. Le maltage comprend le traitement de la céréale par une succession d'opérations (notamment : trempage - germination - touraillage - dégermage), après quoi on obtient du malt. Il existe de gros besoins en malt de différentes propriétés et qualités, notamment pour la brasserie.

Les principes généraux du maltage sont quasi ancestraux. On en trouve une synthèse dans l'ouvrage "Malterie et brasserie", de Jean SUNIER, 2ème édition, imprimerie La Concorde, Lausanne, 1968, ou encore dans sa réédition plus récente sous le nouveau titre "La Fabrication de la bière", Alliage éditeur, 26 septembre 2007, ISBN-13 No 978-2921327602.

EP 0 471 143 divulgue un réservoir pour contenir des matériaux de maltage.

Aujourd'hui, le maltage est industriel, et réalisé de plus en plus dans des installations appelées malteries. L'un des buts d'une malterie est de mettre en place une installation automatisée qui procure un excellent rendement en termes qualitatifs, tout en cherchant à réduire les nombreux coûts d'investissement et de fonctionnement de cette industrie: emprise de terrain, génie civil de construction, besoins en énergie, notamment.

De façon générale, une telle installation peut comporter au moins un outil de trempage, au moins un germoir et au moins une touraille, avec un système de transport de l'un à l'autre, dans l'ordre. Le germoir et la touraille sont des installations sous atmosphère contrôlée, avec des pression, température et humidité variant de façon importante au cours des étapes de germination et de touraillage. Il en résulte des efforts mécaniques importants en raison de la pression s'exerçant sur des grandes surfaces, de la dilatation thermique, du gradient de température susceptible de dépasser 100°C, voire 150°C, entre l'atmosphère ambiante et la température intérieure, et des risques de corrosion, notamment d'oxydation des parties métalliques et d'acidification du béton.

L'invention vient améliorer la situation.

Selon un aspect de l'invention, un dispositif de malterie sous atmosphère contrôlée, comprend un sol, des murs et un toit. Le toit comprend une pluralité de panneaux composites et une charpente extérieure à double effet de support desdits panneaux et de reprise des efforts exercés sur les panneaux dans le cas d'une pression intérieure supérieure à la pression atmosphérique. La charpente extérieure est ancrée dans les murs. Chaque panneau comprend une face intérieure en tôle inox, une face extérieure en tôle d'acier galvanisé et une isolation entre lesdites faces. Lesdits panneaux sont assemblés de façon étanche entre eux.

D'autres caractéristiques et avantages de l'invention apparaîtront à l'examen de la description détaillée ci-après, et des dessins annexés, sur lesquels :
- la figure 1 est, en vue de dessus, un schéma d'implantation pour un mode de réalisation particulier d'une installation de maltage,
- la figure 2 est, en perspective, un schéma de principe de l'implantation des convoyeurs,
- la figure 3 est, en vue de dessus, un schéma d'implantation pour un mode de réalisation particulier d'une touraille,

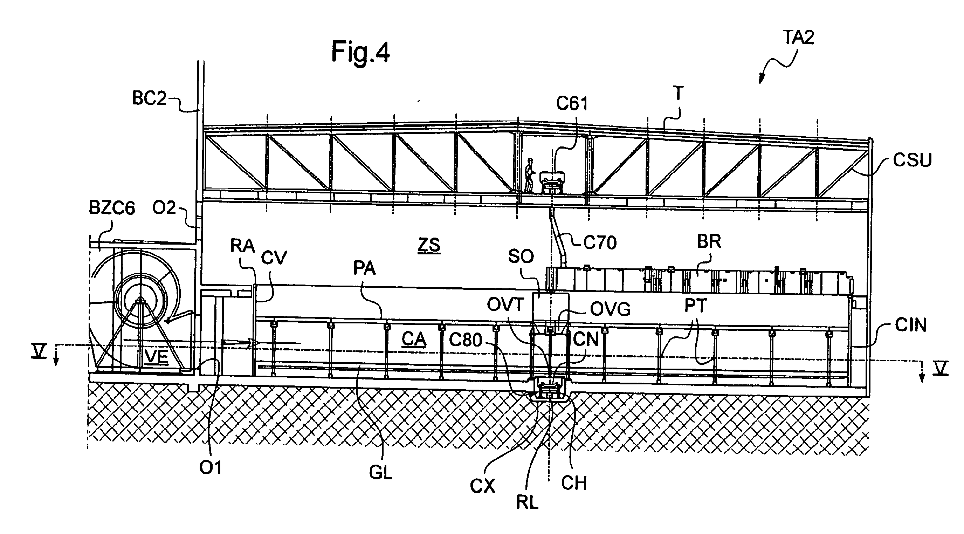

- la figure 4 est, en coupe, selon IV-IV de la figure 3, un schéma d'implantation pour un mode de réalisation particulier d'une touraille,
- la figure 5 est une vue en coupe selon V-V de la figure 1,
- la figure 6 est une vue en coupe selon VI-VI de la figure 1,
- la figure 7 est une vue schématique d'une charpente de malterie,
- la figure 8 est une vue de détail de la jonction de deux panneaux, et
- la figure 9 est une vue de détail d'une autre jonction de deux panneaux.

Les dessins annexés pourront non seulement servir à compléter l'invention, mais aussi contribuer à sa définition, le cas échéant.

Il est fait référence aux ouvrages "Malterie et brasserie" et/ou "La Fabrication de la bière", déjà cités, pour acquérir au besoin une connaissance générale des installations de malterie. Le maltage réalisé en malterie fait appel à des techniques complexes, et les éléments connus de l'homme du métier ne seront pas décrits en détail ici, en dehors de ce qui est directement nécessaire.

La suite de la présente description est faite en référence à l'orge en tant que céréale.

Abstraction faite des tâches d'intendance comme le stockage des grains d'orge, le processus de maltage comprend au moins les étapes suivantes:
a) Un trempage des grains d'orge. Celui-ci peut se faire dans différentes sortes de cuves de trempage, que l'on appellera génériquement "outil de trempage".
b) La germination, qui s'effectue dans des germoirs susceptibles de plusieurs modes de réalisation, notamment en raison de leur forme, qui peut être circulaire, ou au contraire semblable à un rectangle allongé. Après cette étape l'orge est qualifiée de malt vert.
c) Le touraillage, qui est presque toujours fait dans un appareil de forme circulaire, car il s'agit de faire sécher l'orge sur une grille en le faisant traverser par de l'air chaud, tout en le retournant et/ou l'égalisant avec un bras radial. Après cette étape l'orge est qualifiée de malt.
d) Le dégermage, qui consiste à éliminer les radicelles de l'orge.

On donnera maintenant quelques indications générales typiques sur ces différentes étapes. Les grains de céréale sont tout d'abord soigneusement nettoyés. Le but principal du trempage est de porter le grain à une teneur en eau proche de 50 %, typiquement entre 40 et 45 %. Il est bon aussi de lui apporter de l'oxygène, de sorte que la germination soit tout juste initiée ou sur le point de l'être en sortie de trempage.

On utilise la trempe alternée ou discontinue, avec des alternances de période pendant lesquelles le grain est sous l'eau, et d'autres (de durée environ moitié) où le grain est à découvert.

La température de l'eau est typiquement de 12 à 15°C, voir 20°C avec alternance d'eau froide. Le maximum est autour de 35°C, où le grain risque de mourir. Différents additifs peuvent être prévus pour empêcher la fermentation et le développement de microorganismes pendant le trempage.

La germination se fait en plaçant un lit de grains trempés sur une grille fine, traversée par un flux d'air sous température, pression et humidité contrôlées, avec' brassage des grains à l'aide de vis sans fin verticales plongeant dans le lit, et entraînées par des moteurs, l'ensemble étant par exemple monté sur un chariot mobile qui parcourt le germoir. Ce chariot serait un bras pour un germoir circulaire. Pour un germoir rectangulaire, il s'agit d'un chariot mobile sur la longueur. Le mouvement des vis sans fin et la vitesse de déplacement du chariot sont sous contrôle

On en vient maintenant au touraillage. Là aussi, cette opération s'effectue sur une grille, sur laquelle les grains sont posés. Il s'agit de les faire sécher pour stopper la germination, tout en gardant le mieux possible les propriétés désirées du malt. Comme son nom l'indique, le touraillage s'effectue en principe sur une plate-forme circulaire mise d'une grille traversée par de l'air chaud, également sous température, pression et humidité contrôlées. Un bras de niveau réglable verticalement peut être muni de vis sans fin plongeant dans le lit de grains, afin de tendre à l'homogénéiser verticalement ou d'une vis d'axe horizontal pour l'égalisation, le chargement et le déchargement, ou encore de pales fixes ou réglables. La vitesse de rotation de la ou des vis sans fin et le sens et la vitesse angulaire d'avancée du bras sont également contrôlées. Le temps de séjour des grains est également contrôlé.

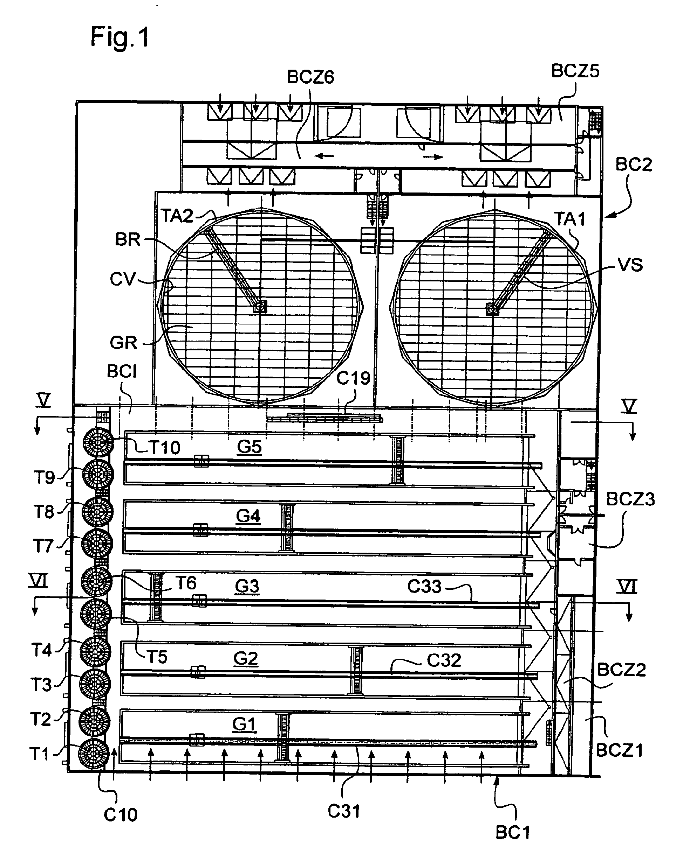

La figure 1 illustre un mode de réalisation des installations. Elle fait apparaître à droite un premier corps de bâtiment BC1, et à gauche un second corps de bâtiment BC2. Dans le corps de bâtiment BC1 sont implantés plusieurs, ici cinq, germoirs G1 à G5. Dans le même corps de bâtiment, en bout des germoirs, ici au-dessous, sont implantés plusieurs, ici dix, cuves de trempage TR1 à TR10. Ici, les cuves de trempage sont disposées par paire au bout de chacun des germoirs, d'où une réduction de la surface couverte, du nombre de bâtiments et la possibilité d'utiliser un même convoyeur pour déplacer le grain d'un outil de trempage vers un germoir et pour déplacer le malt vert d'un germoir vers une touraille, à des moments différents.

Dans le second corps de bâtiment BC2 sont prévus deux tourailles TA1 et TA2. On peut réutiliser de l'air de sortie d'une touraille dans la touraille voisine, d'où une réduction de la consommation d'énergie en chauffage et en ventilation. En outre, l'air de sortie de la deuxième touraille présente à certains moments de fonctionnement un taux de saturation en vapeur d'eau plus élevé d'où une capacité calorique accrue et une meilleure récupération d'énergie dans des échangeurs de chaleur.

Des zones de service sont prévues adjacentes à la partie supérieure du corps de bâtiment BC1, en BCZ1, BCZ2 et BCZ3.

D'autres zones de service sont prévues en BCZ5 et BCZ6. Elles servent essentiellement à récupérer le fluide gazeux utilisé au touraillage, qui traverse dans cet exemple la touraille de bas en haut, et se voit donc récupéré vers la gauche de la figure 1.

Des installations de sous-sols, non représentées, permettent d'élaborer l'atmosphère gazeuse requise, d'une part, pour la germination, d'autre part, pour le touraillage, ainsi que l'air requis pour les cuves de trempage lors de phases de respiration du grain.

Sur la figure 1, on distingue un convoyeur C10 passant sous les cuves TA1 à TA 10, ainsi que la trace d'un convoyeur C19 sur lequel on reviendra.

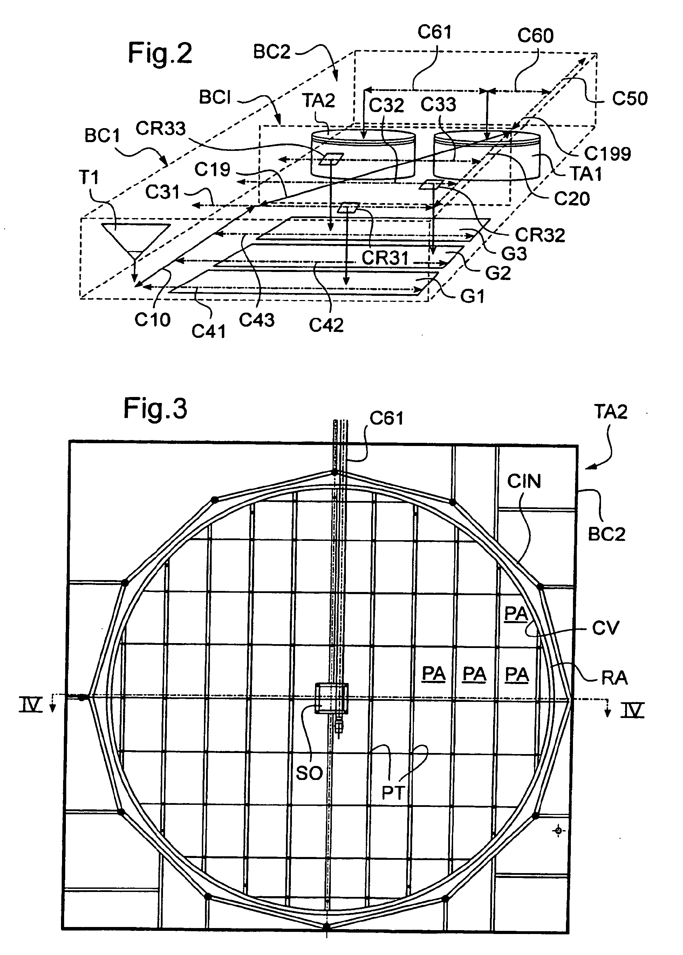

Il est maintenant fait référence à la figure 2, qui est un schéma en perspective illustrant le cheminement des différents convoyeurs dans l'installation.

La disposition du bâtiment est définie sur la figure 2 par un trait pointillé fin et serré. On distingue à l'avant le corps de bâtiment BC1 et à l'arrière le corps de bâtiment BC2. Entre ceux-ci apparaît une cloison verticale BC1, qui délimite les deux corps de bâtiment BC1 et BC2.

Pour simplifier, une seule cuve de trempage TA1 est représentée, et de même seuls trois germoirs G1 à G3 sont représentés, au lieu des cinq de la figure 1.

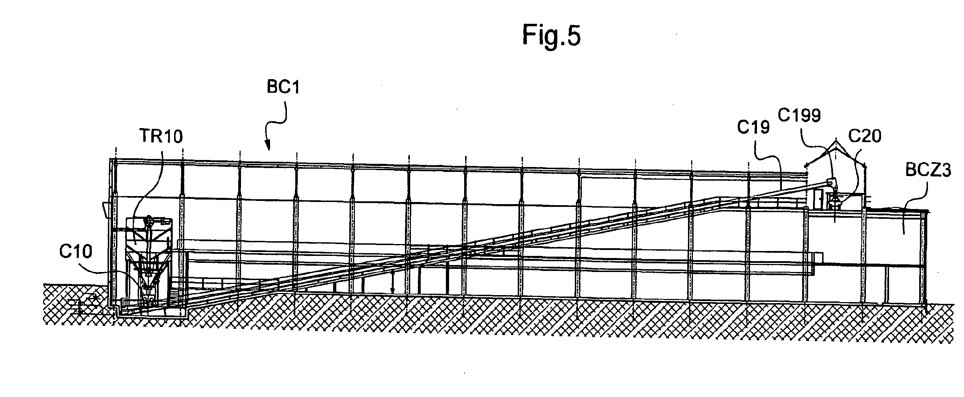

Le convoyeur C10 passe sous les cuves de trempage telles que TA1, pour rejoindre la partie basse du convoyeur C19, qui est un convoyeur ascensionnel situé près de la cloison BC1, voir figure 5. A son extrémité supérieure C199, le convoyeur C19 peut desservir soit le convoyeur C20, soir le convoyeur C50, tous deux étant horizontaux en partie haute des corps de bâtiment BC1 et BC2, respectivement.

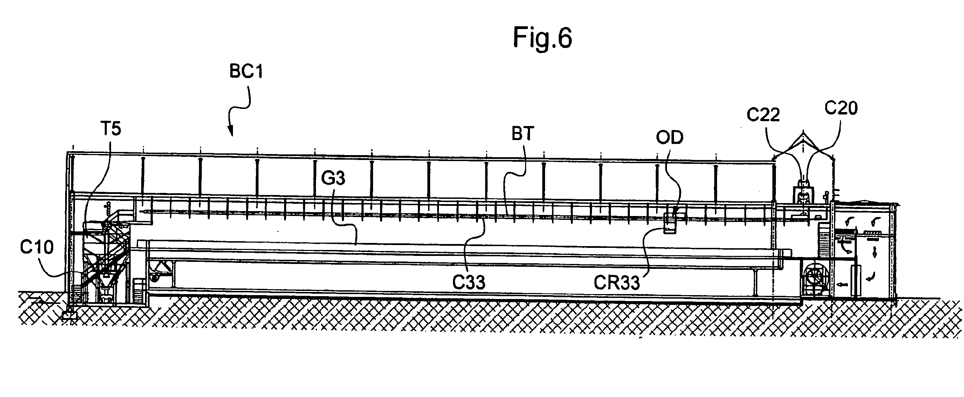

Du convoyeur C20, il part trois convoyeurs C31, C32 et C33, perpendiculaires au convoyeur C20. Les convoyeurs C31, C32 et C33 sont respectivement situés au-dessus des germoirs G1 à G3, sensiblement dans leur plan de symétrie longitudinale. La flèche C319 située à l'extrémité gauche du convoyeur C31 indique le grain trempé peut se déverser dans germoir G1. En fait, ce déversement peut se faire de manière commandée en n'importe quelle position du convoyeur C31 au-dessus du germoir G1, de sorte que l'on puisse remplir celui-ci de grains de manière sensiblement régulière. Les convoyeurs perpendiculaires C31, C32 et C33 sont munis d'un chariot CR31, CR32 et CR33 formant organe de déversement OD, voir figure 6. Chaque chariot CR31, CR32 et CR33 est disposé le long du convoyeur correspondant et peut se déplacer continûment ou entre des positions de travail prédéfinies. Chaque chariot CR31, CR32 et CR33 comprend des rouleaux inversant la concavité de la bande du convoyeur vue en section transversale, faisant ainsi tomber le grain. En d'autres termes, la bande présente en section courante une concavité vers le haut en forme de ∪, et au niveau du chariot une concavité vers le bas en forme de ∩.

Le vidage des germoirs s'effectue par le bas. Les grains germés sont repris par des convoyeurs horizontaux C41, C42 et C43, pour les germoirs G1 à G3 respectivement.

A leur extrémité gauche, ces convoyeurs C41 à C43 rejoignent le convoyeur C10 déjà cité. Les grains germés sont transportés par ce convoyeur C10 jusqu'au convoyeur ascensionnel C19, pour retrouver cette fois le convoyeur supérieur C50, lequel est suivi d'un convoyeur perpendiculaire horizontal C60, pour alimenter la touraille TA1, sensiblement en son centre. Le grain peut également être repris par le convoyeur C61 pour alimenter la touraille TA2, sensiblement en son centre, au lieu de la touraille TA1.

Le schéma de principe qui précède comporte différentes jonctions et commutations de convoyeurs, sur lesquelles on reviendra par la suite. Dans le mode de réalisation représenté, les tourailles TA1 et TA2 comprennent une grille. Alternativement, les tourailles peuvent comprendre une pluralité de grilles superposées avec un mécanisme de descente des grains d'une grille vers une grille d'un niveau inférieur. La température dans les tourailles TA1 et TA2 peut dépasser 120°C et la pression 1500 Pa.

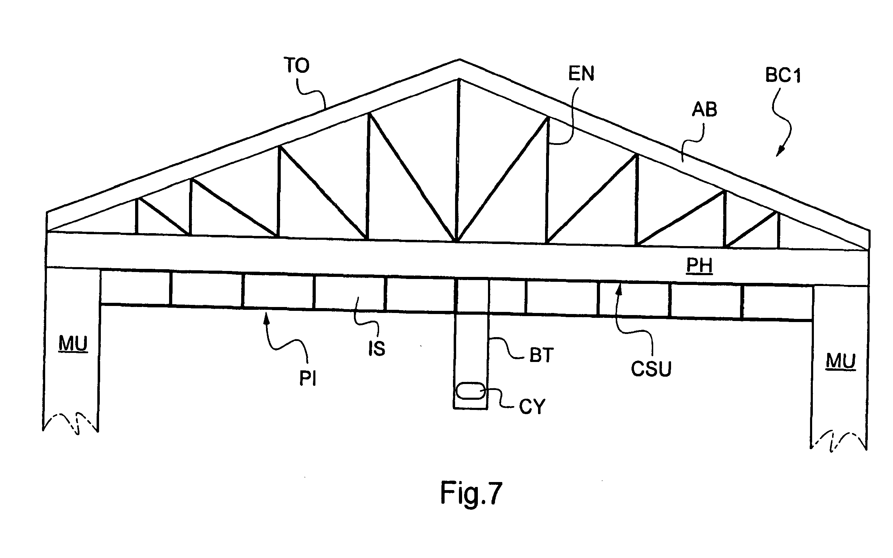

Dans le mode de réalisation illustré sur la figure 7, le bâtiment BC1 comprend des murs MU, par exemple réalisés en béton armé, et une charpente supérieure CSU reposant sur le sommet des murs. Les murs MU peuvent alternativement comprendre une structure métallique et des panneaux isolants. La charpente CSU comprend en coupe transversale une poutre horizontale pH, des arbalétriers AB disposés en forme d'accent circonflexe et formant avec la poutre horizontale PH un triangle, en général isocèle.

La charpente supérieure CSU comprend également des entretoises N disposées entre la poutre horizontale PH et les arbalétriers AB. Une couverture en tôle TO recouvre la charpente supérieure CSU.

Sur la face inférieure de la charpente CSU, sont accrochés une pluralité de panneaux isolants PI en forme générale de parallélépipède rectangle, disposés entre les murs MU. Les panneaux isolants PI assurent l'isolation thermique et l'étanchéité au gaz du bâtiment BC1. Les panneaux isolants PI forment la paroi supérieure des germoirs ou des tourailles. On rappellera que dans le cas d'une touraille, la température à l'intérieur du bâtiment peut monter jusqu'à 120°C et la pression jusqu'à environ 1500 Pa ce qui génère des dilatations importantes et des efforts considérables. A cet effet, la poutre horizontale PH est fixée aux murs MU au moyen de tirants scellés. Les panneaux isolants PI sont étanches en eux-mêmes en ce sens que leur face inférieure est imperméable au gaz et forment un revêtement étanche pour l'intérieur du bâtiment BC1 en ce sens que lesdits panneaux isolants PI sont jointifs de façon étanche aux gaz. La charpente CSU reprend les efforts de l'installation à l'arrêt (masse des panneaux PI, de la couverture TO, de la neige, etc., contraintes liées au vent...) et en fonctionnement (sur pression).

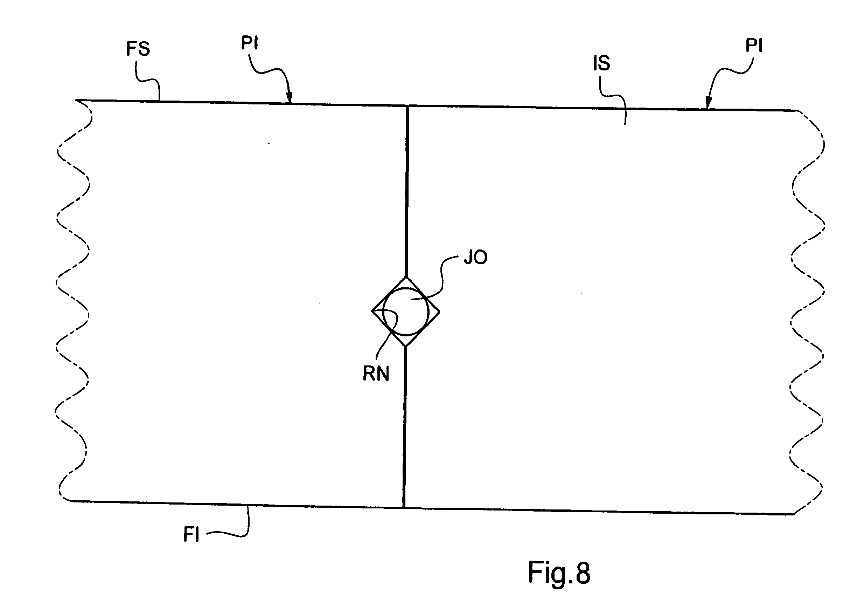

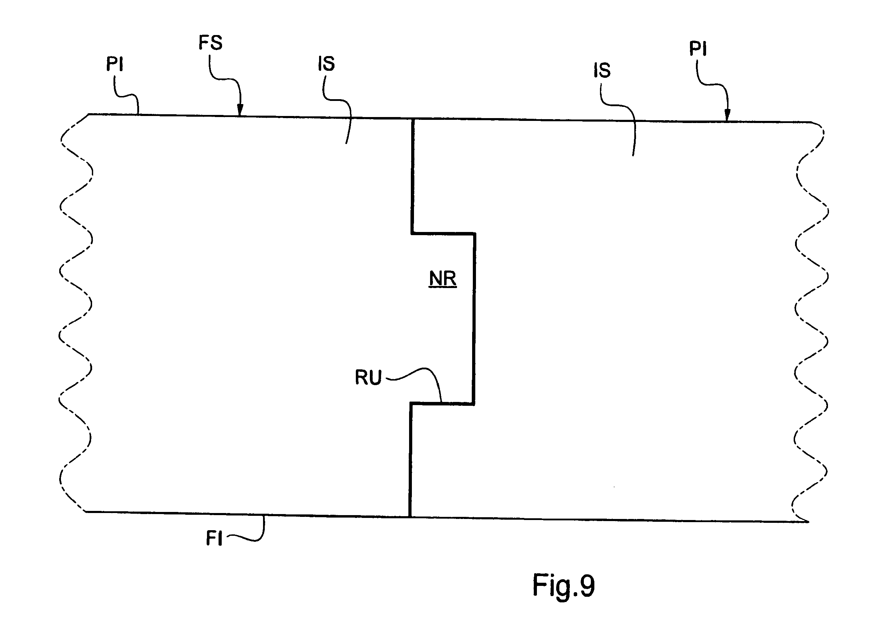

Les panneaux isolants PI illustrés sur les figures 8 et 9 comprennent une face inférieure FI réalisée en acier inoxydable, une face supérieure FS réalisée en un matériau économique, par exemple en tôle d'acier galvanisé. Les tôles de la face inférieure et de la face supérieure sont soudées entre elles. La jonction entre les tôles des faces inférieure FI et supérieure FS peut être réalisée par soudure ou pliage de tôles, sensiblement au milieu de l'épaisseur des panneaux isolants PI ou légèrement plus près de la face supérieure FS. L'intérieur des panneaux isolants PI est entièrement fermé par lesdites tôles formant également des bords latéraux. L'intérieur des panneaux isolants PI est rempli d'un matériau isolant, par exemple de la laine de roche ou encore de la mousse expansée.

Dans le mode de réalisation illustré sur la figure 8, les panneaux isolants PI comprennent sur chacune de leurs faces latérales une rainure RN disposée sensiblement à mi-distance entre les faces inférieure FI et supérieure FS. La rainure RN s'étend sur les quatre côtés. La rainure RN présente, ici, une section en triangle rectangle. Néanmoins, la rainure RN peut présenter d'autres formes, en demi-cercle, en demi-ellipse, rectangulaire, etc.. Un joint isolant JO est disposé dans la rainure RN tout en étant également en saillie dans la rainure RN du panneau isolant voisin. Le joint d'étanchéité JO peut être réalisé en matériau souple, par exemple à base de caoutchouc naturel ou synthétique. Le joint JO peut également être prévu dans un matériau résistant à la chaleur, par exemple.

Deux panneaux isolants PI voisins sont fixés, par collage ou encore par soudure ou par brasure. La fixation d'un panneau isolant PI à la charpente supérieure CSU peut être effectuée par tous moyens connus de l'homme du métier, par exemple de façon directe aux moyens de vis ou de boulons, par l'intermédiaire d'un châssis de support à base de profilés métalliques, par des crochets, etc... Les faces latérales de deux panneaux isolants PI voisins en regard sont en contact mutuel et peuvent être collées, soudées ou encore brasées ensemble.

Dans le mode de réalisation illustré sur la figure 9, les panneaux isolants PI voisins possèdent une complémentarité de forme mâle-femelle. L'un des panneaux PI est pourvu d'une nervure NR située sensiblement au milieu de son épaisseur tandis que le panneau complémentaire est pourvu d'une rainure RU de forme complémentaire. La nervure NR et la rainure RU peuvent présenter une section transversale de forme générale rectangulaire. Un joint souple de faible section ou encore une pâte de scellement peut être disposé entre les panneaux isolants PI. Chaque panneau PI comprend une grande face latérale et une petite face latérale rainurées et une grande face latérale et une petite face latérale nervurées

Dans un mode de réalisation, la charpente CSU supporte également un convoyeur CY par l'intermédiaire d'un bâti BT. Le bâti BT peut comprendre des éléments traversant les panneaux PI.

## Revendications

1. Dispositif de malterie sous atmosphère contrôlée, comprenant un sol, des murs et un toit, **caractérisé en ce que** le toit comprend une pluralité de panneaux composites (PI) et une charpente extérieure (CSU) à double effet de support desdits panneaux et de reprise des efforts exercés sur les panneaux dans le cas d'une pression intérieure supérieure à la pression atmosphérique, la charpente extérieure (CSU) étant ancrée dans les murs (MU), chaque panneau (PI) comprenant une face intérieure (FI) en tôle inox, une face extérieure (FS) en tôle d'acier galvanisé et une isolation (IS) entre lesdites faces, lesdits panneaux étant assemblés de façon étanche entre eux.

2. Dispositif selon la revendication 1, dans lequel l'isolation (IS) comprend de la laine de roche.

3. Dispositif selon la revendication 1, dans lequel l'isolation (IS) comprend de la mousse expansée.

4. Dispositif selon l'une des revendications précédentes, dans lequel la charpente (CSU) supporte une toiture (TO).

5. Dispositif selon l'une des revendications précédentes, dans lequel les panneaux (PI) sont disposés sous la charpente (CSU).

6. Dispositif selon l'une des revendications précédentes, dans lequel la charpente (CSU) supporte au moins un convoyeur (CY).

7. Dispositif selon l'une des revendications précédentes, dans lequel la charpente supporte au moins une cuve de trempage.

8. Dispositif selon l'une des revendications précédentes, dans lequel les murs comprennent une charpente métallique et des panneaux.

9. Dispositif selon l'une des revendications 1 à 7, dans lequel les murs sont réalisés en béton armé.

## Claims

1. Device for malting under a controlled atmosphere, comprising a floor, walls and a roof, **characterised in that** the roof comprises a number of composite panels (PI) and an outer frame (CSU) having the twofold purpose of supporting the said panels and containing the forces applied to the panels in the event that an internal pressure is greater that the atmospheric pressure, the outer frame (CSU) being anchored in the walls (MU), each panel (PI) comprising an inner face (FI) in stainless steel sheet, an outer face (FS) in galvanised steel sheet and insulation (IS) between the two faces, the said panels being sealingly joined together.

2. Device according to claim 1, in which the insulation (IS) comprises rock wool.

3. Device according to claim 1, in which the insulation (IS) comprises expanded foam.

4. Device according to any of the preceding claims, in which the frame (CSU) supports a roof (TO).

5. Device according to any of the preceding claims, in which the panels (PI) are arranged below the frame (CSU).

6. Device according to any of the preceding claims, in which the frame (CSU) supports at least one conveyor (CY).

7. Device according to any of the preceding claims, in which the frame (CSU) supports at least one dip tank.

8. Device according to any of the preceding claims, in which the walls comprise a metal frame and panels.

9. Device according to any of claims 1 to 7, in which the walls are constructed of reinforced concrete.

## Patentansprüche

1. Anordnung zum Mälzen unter kontrollierter Atmosphäre, mit einem Boden, mit Mauern und einem Dach, **dadurch gekennzeichnet, dass** das Dach eine Vielzahl von Verbund-Flächenelementen (PI) sowie eine äußeres Gerüst (CSU) mit der doppelten Wirkung der Abstützung der Flächenelemente und der Aufnahme der bei überatmosphärischem Innendruck auf diese Flächenelemente ausgeübten Kräfte aufweist, wobei das äußere Gerüst (CSU) in den Mauern (MU) verankert ist und jedes Flächenelement (PI) eine Innenlage (FI) aus Edelstahlblech, eine Außenlage (FS) aus verzinktem Stahlblech und eine Isolation (IS) zwischen diesen Lagen aufweist und die Flächenelemente gegeneinander dicht abschließend montiert sind.

2. Anordnung nach Anspruch 1, bei der die Isolation (IS) Steinwolle aufweist.

3. Anordnung nach Anspruch 1, bei der die Isolation (IS) geblähten Schaumstoff aufweist.

4. Anordnung nach einem der voranstehenden Ansprüche, bei der das Gerüst (CSU) eine Bedachung trägt.

5. Anordnung nach einem der vorhergehenden Ansprüche, bei der die Flächenelemente (P1) unter dem Gerüst (CSU) angeordnet sind.

6. Anordnung nach einem der vorhergehenden Ansprüche, bei der das Gerüst (CSU) mindestens einen Förderer (CY) trägt.

7. Anordnung nach einem der vorhergehenden Ansprüche, bei der das Gerüst mindestens einen Einweichbottich trägt.

8. Anordnung nach einem der vorhergehenden Ansprüche, bei der die Mauern ein Metallgerüst und Flächenelemente aufweisen.

9. Anordnung nach einem der Ansprüche 1 - 7, bei der die Mauern aus armierten Beton ausgeführt sind.
